# EUROPEAN PATENT APPLICATION

(11) **EP 1 922 924 A2**
(43) Date of publication of application: **21.05.2008**
(21) Application number: 07022202.1
(22) Date of filing: 15.11.2007
(51) Int. Cl.: A01N 1/02

(54) **Methods and compositions for reanimating cryopreserved oocytes**

(30) Priority: 15.11.2006 US 859305 P; 30.03.2007 US 694848
(71) Applicant: Mariposa Biotechnology, Inc, San Clemente CA 92673 (US)
(72) Inventor: Diaz, David, San Clemente CA 92673 (US)
(74) Representative: Wibbelmann, Jobst

(57) **Abstract**

Disclosed are methods and compositions useful for thawing cryopreserved oocytes and, in particular, mammalian oocytes such as human oocytes.

## Description

### CROSS-REFERENCE TO RELATED APPLICATION

This application is a continuation-in-part of the U.S. Patent Application Serial No. 11/694,848, filed March 30, 2007 which claims priority under 35 U.S.C. §119(e) to U.S. Provisional Patent Application Serial No. 60/859,305, filed November 15, 2006, both of which applications are incorporated herein by reference in their entirety.

### Field of the Invention

This invention generally relates to methods and compositions useful for reanimating cryopreserved oocytes and, in particular, mammalian oocytes such as human oocytes.

### State of the Art

The ability to cryopreserve and then reanimate oocytes in an easily reproducible manner that results in a high rate of viability upon thawing has not yet been achieved. However, it has been shown that it is possible to successfully produce offspring from frozen oocytes and, accordingly, this suggests that a reproducible method for reanimating frozen oocytes is achievable.

Several oocyte thawing techniques have been suggested, each with its own set of advantages and disadvantages. However, as a whole, these methods are rather inefficient, unpredictable and have yielded suboptimal rates of oocyte thaw survival, oocyte fertilization, and embryo cleavage.

Typical of these previously suggested techniques include thawing procedures which sequentially move the previously frozen oocytes through several solutions. In Fabbri, U.S. Patent No. 7,011,937, frozen oocytes, in French Straws, were initially air-warmed for 30 seconds and then immersed in a 30°C water bath for 40 seconds to remove any traces of ice. The oocytes were then treated in a serial set of four solutions as follows:
the first solution contains 1 M 1,2-propanediol (PG), 0.3 M sucrose and synthetic serum substitute (SSS) maintained at room temperature and incubated for 5 minutes;
the second containing 0.5 M PG, 0.3 M sucrose and SSS maintained at room temperature and incubated for 5 minutes;
the third containing 0.3 M sucrose and SSS maintained at room temperature and incubated for 5 minutes;
while the fourth contains SSS in a PBS solution maintained at room temperature for 10 minutes followed by maintaining the solution at 37°C for about 10 minutes.

Notwithstanding statements of success in the literature, the overall success rate from freezing to live birth remains unacceptably low.

### SUMMARY OF THE INVENTION

This invention provides, in part, methods and compositions for use in reanimating frozen oocytes.

This invention is predicated, in part, on the discovery that minimization of cellular stress on the oocytes during the thawing process is essential to provide for reproducible reanimation methodology. Specifically, in one aspect, this invention is directed to the discovery that the use of one or more reanimation solutions at temperatures maintained above room temperature but below body temperature minimizes cellular stress on the reanimated oocyte. In another aspect, this invention is further directed to the discovery that prolonged incubation of reanimated oocytes in a reanimation stabilization solution maintained at body temperature enhances the viability of the oocytes.

Accordingly, in one embodiment of this invention, there is provided a method for reanimating frozen oocytes which method comprises:
a) removing one or more containers from cryoprotection which containers comprise frozen oocyte(s) in a cryoprotectant solution;
b) maintaining the withdrawn containers under conditions to melt any intracytoplasmic ice in the oocyte and then removing the oocyte(s) from the container;
c) reanimating the oocyte(s) by immersion in successive warm aqueous solutions each containing a lower gradient of cryoprotectant than the prior solution under conditions wherein oocyte(s) is(are) reanimated and lyses of the oocyte due to osmotic shock is inhibited while maintaining each solution at a temperature of from about 28° to 35°C; and
d) stabilizing the reanimated oocytes in a reanimation stabilization solution maintained at a temperature of from about 33° to about 38°C for a period of time sufficient to stabilize the reanimated oocytes for fertilization.

In one embodiment, this invention is directed to a cryoprotectant solution for oocyte thawing, comprising a cryaoprotectant wherein the cryoprotectant solution is maintained at a temperature of from about 29°C to 34°C, and wherein the cryoprotectant solution reanimates an oocyte and inhibits a lyses of the oocyte by an osmotic shock.

### DETAILED DESCRIPTION

As used herein, the following definitions shall apply unless otherwise indicated.

"Mature animal oocytes" refers to harvested oocytes which are graded on a maturation scale as "mature stage -- MII." This scale further identifies harvested oocytes as "intermediate stage -- (MI)" or "immature stage -- (GV)".

"Reanimated oocytes" refers to thawed oocytes which are capable of fertilization and embryo development.

The term "egg" as used herein is meant to be synonymous with the term "oocyte".

"Reanimated stabilization solutions" refer to those solutions wherein the reanimated oocyte is incubated after reanimation. The stabilization solutions useful in this invention include, by way of the example, Global^{®} media (available from Life Global, IVF Online), Global^{®} media supplemented with SSS (available from Irvine Scientific, Santa Ana, California, USA), human tubal solution (HTF - available from Irvine Scientific, Inc., Santa Ana, California) optionally supplemented with SSS and/or an antibiotic (e.g., gentamicin) and modified HTF [HTF with HEPES (mHTF) - available from Irvine Scientific, Inc., Santa Ana, California] optionally supplemented with SSS and/or an antibiotic (e.g., gentamicin), phosphate buffered saline (PBS), sodium depleted PBS (e.g., sodium hydrogen phosphate (H₂NaPO₄) and the like.

The thawed oocyte is immersed in a reanimation stabilization solution to reestablish the processes relating to formation of meiotic spindle required for fertilization as well as enhancing mitochondria energy production and reestablishing the mRNA processes and protein activity.

The term "cryoprotectant" refers to a liquid which permeates across the cell wall of the animal oocyte typically by osmotic methods and which promotes survival and retention of viability of the oocyte during the process of cryopreserving as well as in the cryopreserved state. Suitable cryoprotectants are well known in the art and include, by way of example only, dimethyl sulfoxide (DMSO), ethylene glycol, propylene glycol (1,2-propanediol), glycerol, as well as mixtures of 2 or more of such cryoprotectants, and the like.

The term "sugar" refers to mono- and oligosaccharides having from 1 to 8 sugar units and preferably 2-3 sugar units. Suitable sugars include, by way of example, sucrose, dextrose, trehalose, lactose, raffinose, and the like.

The term "Global^{®} media," "Global^{®} media supplemented with SSS," "human tubal solution," or modified human tubal solution," refers to a commercially available solution (as described herein) or a solution formulation of Tables 1-2, and/or Table 9.

### 1. Methodology

The methods of this invention involve a multi-step process for efficiently reanimating cryopreserved animal oocytes. Specifically, there is provided a method for reanimating cryopreserved animal oocytes which method comprises:
a) removing one or more containers from cryoprotection which containers comprise frozen oocyte(s) in a cryoprotectant solution;
b) maintaining the withdrawn containers under conditions to melt any cytoplasmic ice in the oocyte and then removing the oocyte(s) from the container;
c) reanimating the oocyte(s) by immersion in successive warm aqueous solutions each containing a lower gradient of cryoprotectant than the prior solution under conditions wherein oocyte(s) is(are) reanimated and lyses of the oocyte due to osmotic shock is inhibited while maintaining each solution at a temperature of from about 28° to 35°C; and
d) stabilizing the reanimated oocytes in a reanimation stabilization solution maintained at a temperature of from about 33° to about 38°C for a period of time sufficient to stabilize the reanimated oocytes for fertilization.

In the following discussion, the term "oocyte" refers to both the singular and plural regardless of whether this term employs terms such as "a", "the" and the like.

In one embodiment, the entire time from removal of the container from cryoprotection until placing the reaniminated oocytes into the reanimated stabilization solution is no more than about 1 hour; preferably no more than about 30 minutes and still more preferably from about 15 to 20 minutes.

In one embodiment, maintaining the withdrawn containers under conditions to melt any intracytoplasmic ice in the oocyte is achieved by:
a) exposing the containers to ambient atmospheric conditions (e.g., air environment maintained at room temperature); and
b) immersion of the containers in a warm water bath.

In one aspect of this embodiment, the containers are first exposed to ambient atmospheric conditions preferably for a period of less than 5 minutes and more preferably for less than 1 minute and even more preferably for about 15 seconds.

In another aspect of this embodiment, the containers are immersed in a warm water bath preferably maintained at a temperature of from about 25° to 35°C. In a more preferred aspect of this embodiment, the warm water bath is maintained at a temperature of from about 30° to 34°C and even more preferably at about 32 ± 0.5°C. Immersion in this warm water bath is preferably for less than 5 minutes and more preferably for less than 1 minute and even more preferably for about 15 seconds.

As is apparent to one skilled in the art, the total time for air exposure and water immersion is selected so as to melt any intracytoplasmic ice in the oocyte. Accordingly, the duration for one of the two steps can be shortened and the other lengthened provided that the intracytoplasmic ice is melted.

In one embodiment, the oocytes are then removed from the containers and reanimated by immersion in successive warm aqueous solutions each containing a lower gradient of cryoprotectant than the prior solution under conditions wherein oocyte(s) is(are) reanimated and lyses of the oocyte(s) due to osmotic shock is inhibited. Preferably, each of these solutions are maintained at a temperature of from about 29° to 34°C and more preferably at about 32°C ± 0.5°C.

In one aspect of this embodiment, three successive solutions containing a lower gradient of cryoprotectant are employed. In a particularly preferred route, these multiple solutions are employed which in one example comprise:
a) a first solution comprising from about 0.8 to about 1.2 M propylene glycol;
b) a second solution comprising from about 0.3 to about 0.7 M propylene glycol; and
c) a third solution comprising less than 0.3 M propylene glycol, preferably less than 0.1 M propylene glycol, and even more preferably no propylene glycol.

Each of these solutions optionally further comprise components such as a sugar, m-HTF and/or SSS. Preferably, these solutions comprise sucrose, m-HTF and SSS. In a particularly preferred embodiment whether used alone or in combination, the sugar concentration is preferably from about 0.20 to 0.30 M, and more preferably about 0.25M; the m-HTF is preferably employed in a range from about 70 to 90 percent by volume and the SSS is preferably employed at a concentration of from about 10 to 30 percent by volume.

In one embodiment, the oocyte(s) transferred from the container to the first solution is (are) immersed in the first solution at a temperature of from about 30 to 34°C, preferably at 31 to 33°C, and more preferably at 32 ± 0.5°C. Immersion times preferably run from about 3-7 minutes, preferably about 5 minutes. Preferably, the concentration of propylene glycol in the first solution is about 1.0 M and the pH of this solution is preferably maintained at about 7.2 to 7.3.

In a further aspect of this embodiment, the oocyte(s) is (are) transferred from this first solution to the second solution described above. In a preferred embodiment, the so transferred oocyte(s) is (are) immersed in the second solution at a temperature of from about 30 to 34°C, preferably at 31 to 33°C, and more preferably at 32 ± 0.5°C. Immersion times preferably run from about 3-7 minutes, preferably about 5 minutes. Preferably, the concentration of propylene glycol in the second solution is about 0.5 M and the pH of this solution is preferably maintained at about 7.2 to 7.3.

In a further aspect of this embodiment, the oocyte(s) is (are) transferred from this second solution to the third solution described above. In a preferred embodiment, the so transferred oocyte(s) is (are) immersed in the third solution at a temperature of from about 30 to 34°C, preferably at 31 to 33°C, and more preferably at 32 ± 0.5°C. Immersion times preferably run from about 3-7 minutes, preferably about 5 minutes. Preferably, the concentration of propylene glycol in the first solution is less than about 0.3 M, more preferably, less than 0.1 M and, even more preferably, there is no propylene glycol in this third solution. The pH of this third solution is preferably maintained at about 7.2 to 7.3. In one embodiment, the third solution does not contain any propylene glycol but contains a dehydrating agent such as, sucrose, dextrose, trehalose, lactose, raffinose, and the like. The dehydrating agent facilitates dehydration of the intra-cytoplasmic water in the oocyte. Preferably, such agents do not osmotically traverse the cellular wall of the oocyte.

Upon completion of immersion in this successive series of thawing solutions, the oocyte(s) are placed into a Thawing Stabilization Solution prior to fertilization. This solution stabilizes the oocyte(s) relative to physiological temperature while providing a nutrient rich environment. In a preferred embodiment, the oocytes are maintained in this solution until stabilized. In a preferred embodiment, stabilization occurs within about 2 hours. At this point the oocytes are ready for fertilization.

### 2. Compositions

In one aspect, this invention is directed to a cryoprotectant solution for oocyte thawing, comprising a cryaoprotectant wherein the cryoprotectant solution is maintained at a temperature of from about 29°C to 34°C, and wherein the cryoprotectant solution reanimates an oocyte and inhibits a lyses of the oocyte by an osmotic shock.

In one embodiment, the cryoprotectant solution is maintained at a temperature of from about 30°C to 34°C. In one embodiment, the cryoprotectant solution is maintained at a temperature of from about 31°C to 33°C. In one preferred embodiment, the cryoprotectant solution is maintained at a temperature of 32 ± 0.5°C.

In one embodiment, the cryoprotectant includes, but is not limited to, dimethylsulfoxide, ethylene glycol, propylene glycol, glycerol, and combination thereof.

In one preferred embodiment, the cryoprotectant is propylene glycol. In one embodiment, a concentration of the propylene glycol is from about 0.8 to about 1.2 M. In one embodiment, a concentration of the propylene glycol is from about 0.3 to about 0.7 M. In one embodiment, a concentration of the propylene glycol is less than about 0.3 M. In one embodiment, a concentration of the propylene glycol is less than about 0.1 M.

In one embodiment, the cryoprotectant solution further comprises one or more components such as but are not limited to, a sugar, m-HTF and SSS.

In one embodiment, the sugar is sucrose, dextrose, trehalose, lactose, or raffinose. In one preferred embodiment, the sugar is sucrose. In one embodiment, a concentration of the sugar is from about 0.20 to 0.35 M. In one embodiment, a concentration of the sugar is about 0.25 M.

In one embodiment, the m-HTF is employed in a range from about 70 to 90% by volume.

In one embodiment, the SSS is employed at a concentration of from about 10 to 30% by volume.

In one embodiment, the cryoprotectant solution is of Table 6 or Table 7.

In one embodiment, the invention provides a dehydrating solution for oocyte thawing, comprising a dehydrating agent wherein the dehydrating solution is maintained at a temperature of from about 29°C to 34°C, and wherein the dehydrating solution reanimates an oocyte and inhibits a lyses of the oocyte by an osmotic shock.

In one embodiment, the dehydrating solution is of Table 8.

In one embodiment, the dehydrating agent in the dehydrating solution is sucrose.

In one embodiment, the dehydrating solution is maintained at a temperature of from about 31°C to 33°C.

In one embodiment, the dehydrating solution is maintained at a temperature of about 32 ± 0.5°C.

The following examples are provided to illustrate certain aspects of the present invention and to aid those of skill in the art in practicing the invention. These examples are in no way to be considered to limit the scope of the invention.

### EXAMPLES

The examples below as well as throughout the application, the following compositions are described and are available commercially as stated below:
Global Media, IVF Online, p/n LGGG
Synthetic Serum Substitute (SSS), Irvine Scientific, p/n 99193
Modified Human Tubular Fluid (mHTF), Irvine Scientific, p/n 90126
Propylene Glycol, Sigma Chemicals, p/n 241229
Sucrose, Sigma Chemicals, p/n S1888

In the Examples below, all percents are percents by volume unless otherwise specified. Likewise, all temperatures are reported in degrees Celsius unless otherwise stated.

In the Examples, the following abbreviations have the following meanings:

| | | |
|---|---|---|
| M | = | Molar |
| mHTF | = | modified human tubal fluid |
| Min | = | Minute |
| mL | = | Milliliter |
| p/n | = | Part number |
| SSS | = | synthetic serum supplement |

### EXAMPLE 1

### Freezing the Oocytes

In Example 1 below, the following solutions are recited and were prepared as follows:
**First Stabilization Solution.** A first stabilization solution for oocyte freezing was prepared by using Global Media (IVF Online) with approximately 10% by volume SSS.
**Second Stabilization Solution.** A second freezing solution was prepared and comprises approximately 80% by volume mHTF, supplemented with SSS. The solution should be stored at 4°C prior to use.
**Cryoprotectant Solution.** A cryoprotectant solution is prepared from approximately 1.5 M propylene glycol in mHTF, supplemented with SSS (80:20) and preferably maintained at pH 7.2 to 7.3.
**Dehydrating/Cryoprotectant (D/C) Solution 1.** D/C Solution 1 is comprised of approximately 1.5M propylene glycol suspended in sucrose and further comprising 80:20 mHTF/SSS. Preferably, the sucrose concentration is 0.05 to 0.15M, with a preferred concentration of 0.12M. Preferably this solution is maintained at a pH of from 7.2 to 7.3.
**Dehydrating/Cryoprotectant (D/C) Solution 2.** D/C Solution 2 is comprised of approximately 1.5M propylene glycol suspended in sucrose and further comprising 80:20 mHFT/SSS. Preferably the sucrose is 0.20M to 0.30M, with a preferred concentration of 0.24M. Preferably this solution is maintained at a pH of from 7.2 to 7.3.

### Osmolality of Solutions

The propylene glycol (an anti-freeze) produces artificially high numbers for the osmolality of the solution as the solution freezing point is substantially depressed over typical solutes. The following table provides preferred osmolality for each of the components used which can be achieved by modifying the solution using conventional methods.

| **Solution** | **Preferred Osmolality, mOsm** | **Constituents** |
|---|---|---|
| First Stabilization Solution | 275-305 | Global Media and SSS |
| Second Stabilization Solution | 275-305 | m-HTF and SSS |
| Cryoprotectant solution | 1500-1900 | m-HTF, SSS and propylene glycol |
| D/C 1 | 1700-2000 | m-HTF, SSS , propylene glycol and sucrose |
| D/C 2 | 1900-2200 | m-HTF, SSS , propylene glycol and sucrose |

The osmolality data demonstrates that the stabilization solutions provide the oocytes an opportunity to stabilize in a solution of low to intermediate osmolality prior to immersion in the cryoprotectant solutions having higher osmolality. In addition, the higher temperatures employed in these solutions as compared to the prior art provides additional stability. Each of the above coupled with the immersion times described are employed to stabilize the meiotic spindle of the oocyte which is key to maintaining viability of the oocyte to fertilization after thawing.

It is particularly important that the osmotic differential between in the cryoprotectant solution as well as in the dehydrating/cryoprotecting solutions be sufficiently robust to drive the osmotic exchange without damage to the spindles. If the osmotic differential is too low, then the driving force for osmosis is reduced leading to longer exposure time and possible damage to the spindles. On the other hand, if the osmotic differential is too high, then lysis of the cell membrane can occur.

The osmolality and immersion times for each solution are coupled in a manner that a sufficiently high osmolality of the cryoprotectant solution and the dehydrating/cryoprotecting solutions are required to facilitate rapid exchange of the intracytoplasmic water with cryoprotectant. Specifically, prolonged exposure of the oocytes to these solutions result in increased toxicity and increased irreversible spindle damage. Accordingly, in a preferred embodiment, the immersion times provided above for the cryoprotectant solution and the dehydrating/cryoprotectant solution are relative to the osmolality of these solutions and are selected to maximize oocyte viability.

In a preferred embodiment, the osmolality of the cryoprotectant solution as well as the dehydrating/cryoprotecting solutions is preferably in the range of from about 1000 to 3000 and more preferably from about 1200 to 2500. In a particularly preferred embodiment, the osmolality of the solutions is an upward gradient for each successive solution used. The Table above provides preferred osmolality ranges.

In a preferred embodiment of the present invention, human oocytes are obtained by ultrasound guided technique, known to those of skill in the art.

The harvested Metaphase II (MII) oocytes are examined and those that are spherical, translucent and have extruded their first polar body, are placed into a dish (such as Nunc 4 well dish) containing the **First Stabilization Solution.** The dish is put into a tri-gas incubator with an atmosphere of 89-90% N₂; 5-6% CO₂ and 5% O₂ at 33 to 38°C, preferably 36.5 to 37.5°C for about 2 hours. In a preferred embodiment, the percent CO₂ is adjusted to provided for a pH of the solution of approximately 7.2-7.3. Without being limited to any theory, it is believed that the pH of the stabilization solution is important in maintaining the viability of the oocytes and that careful control of the pH is achieved by adjusting the amount of CO₂ in the solution wherein the pH is controlled t correspond to the intracellular pH of the oocyte. Preferably, the cumulus mass is now removed from the oocyte

Next, the oocytes are transferred into the **Second Stabilization Solution** and cultured for up to 6 to 7 minutes, preferably a range of 2 to 5 minutes, more preferably about 3 minutes in a dish (such as Nunc 4 well dish) at 33 to 38°C, preferably 36.5 to 37.5°C.

Preparations are then made for the oocyte transition into the **Cryoprotecting Solution**, the solution is contained within a dish (such as Nunc 4 well dish) and held at about 35 to 37°C for between 1 to 5 minutes, preferably a range of 1.5 to 3 min and more preferably about 2 minutes.

Next, the oocytes are transferred into **D/C Solution 1**, the solution is contained within a dish (such as Nunc 4 well dish) and held at 35 to 37°C, for about three minutes. The temperature of this solution is then gradually decreased at a rate of 1 to 3°C/min, preferably 2 ± ½ °C/min to a temperature of 22 to 26°C, preferably about 24°C in 8 minutes maximum, and preferably in about 5 minutes.

After completing Step e), The oocytes are then transferred into **D/C Solution 2**, the solution is contained within a dish (such as Nunc 4 well dish) for about 1 to 5 minutes, preferably 1.5-3 minutes, and optimally about 2 minutes at 24°C, while simultaneously loading the oocytes into 0.25 ml plastic straws, available from the IMV International company of Minneapolis MN. The straws are sealed at both ends and placed in an automated biological vertical freezer like the Kryo 10 Series III (Planer 10/1.7 GB).

The straws are chilled at a cooling rate of 2-3°C/min to -7°C. At this temperature, "seeding" is performed by touching the outside of the straw with forceps, which were cooled in liquid nitrogen to induce the water molecules to undergo crystallization. The straws are held at -7°C for ten minutes followed by resumption of cooling at a rate of 0.3°C/minute to -33°C to allow diffusion of the cryoprotectant into the oocyte. The straws are then plunged into liquid nitrogen for storage.

In the preferred embodiment of the invention, the intracellular cytoplasmic organelles and meiotic spindle are spared the injury resulting from the shearing force of ice crystal formation and the exposure to room temperature associated with other freezing protocols.

Furthermore, by limiting the time and temperature exposure of the oocyte to the propylene glycol cryoprotectant, the present invention minimizes toxicity to the oocyte.

### Example 2

### Method for Thawing Oocytes

The reversal of human oocyte freezing is carried out when fertilization of the oocytes is planned. Reanimation of the egg from deep cryostorage requires an efficient and rapid reversal of the freezing phase in such a way as to minimize recrystalization which can occur if the thawing process is performed too slowly.

In a preferred embodiment, the reanimation or thawing phase comprises removing the containers (straws) from the liquid nitrogen container. The straws are held at room temperature for 15 seconds and then submersed in a water bath at about 31 °C for 15 seconds.

In the following steps, thawing of the oocytes is conducted under conditions to remove cryoprotectant from the cytoplasm quickly, while avoiding osmotic shock to the oocyte. The aim of the of these steps is to direct a smooth and efficient diffusion of the highly concentrated intracellular cryoprotectant out of the ooplasm by manipulating the concentration of the propylene glycol cryoprotectant. The oocytes are subjected to three successive rinses of:
**Thawing Solution A:** Approximately 1.0M propylene glycol and sucrose in m-HTF and SSS. The sucrose concentration is 0.20 to 0.35 M sucrose, preferably about 0.29 M. This solution is used at 30 to 34°C, preferably at 31 to 33°C, more preferably at 32 ± 0.5°C, for 4-7 minutes, preferably about 5 minutes.
**Thawing Solution B**: Approximately 0.5 M propylene glycol and sucrose in m-HTF and SSS. The sucrose concentration is 0.20 to 0.35 M sucrose, preferably about 0.29 M. This solution is used at 30 to 34°C, preferably at 31 to 33°C, more preferably at 32 ± 0.5°C, for 4-7 minutes, preferably about 5 minutes.
**Thawing Solution C**: Sucrose in m-HTF and SSS (zero propylene glycol). The sucrose concentration is 0.20 to 0.30M, preferably about 0.25M. This solution is used at 30 to 34°C, preferably at 31 to 33°C, more preferably at 32 ± 0.5°C, for 4-7 minutes, preferably about 5 minutes.

After completing the above steps, the oocytes are ready for incubation. At a temperature of 37°C, the oocytes are incubated in the **Thawing Stabilization Solution,** which is as described in Example 1 for the First Stabilization Solution, for two hours using a tri-gas incubator with an atmosphere of 89-90% N₂; 5-6% CO₂ and 5%O₂ wherein the amount of CO₂ employed is selected to provide a pH of from 7.2 to 7.3. The oocytes have thus been returned to animation.

### Fertilization of the oocyte:

If insemination of the oocytes is planned, conventional intracytoplasmic sperm injection technique(ICSI) is employed because the zona pellucida has become hardened as a by-product of the freezing process. Failure to recognize this important step will lead to very low fertilization rates accounting for the disappointing results with other protocols.

Thus, using the improved embodiment of the invention for the freezing or thawing of fresh human oocytes, excellent survival rates, improved fertilization and embryo cleavage rates can be achieved.

The table below provides a comparison of overall success relative to the reported literature:

| **Year** | **Article** | **Egg/Preg. Ratio** | **Egg thawed/ Eggs survived¹** | **Eggs used** | **Pregnancies** |
|---|---|---|---|---|---|
| 1999 | Porcu, et al., Fertil. Steril., (1999); 72 (Suppl).S2 | 100:1 | | 1502 | 16 |
| 1996 | Tucker, et al., Human Prod., 1996; 11:1513-1515 | 62:1 | | 311 | 5 |
| 1999 | Yang, et al., Fertil. Steril., 1999; 72 (Suppl)S86 | 17:1 | | 120 | 7 |
| 2003 | Fosas, 2003 Hum. Reprod. 2003:18 1417-01421 | 22:1 | | 88 | 4 |
| 2007 | Barritt, Fert. & Ster., 87(1) (2007) | 13:1 | | 79 | 6 (fetal heartbeats)² |
| | Diaz³ | 10.8:1 | 326/302 | 326 | 28 |

| | | | | | |
|---|---|---|---|---|---|
| ¹ Cell membrane intact - no lysis ² Only the Barritt reference used fetal heartbeats as a measure of pregnancy. The other citations employed HCG levels. ³ Data for this invention | | | | | |

The above data demonstrates that the freezing methods of this invention when coupled with thawing methods provide for high success rates in pregnancy.

### Example 3

### Solutions

The following Tables demonstrate various solution formulations that can be used for the freezing or thawing of the oocytes in this invention. These solution formulations can replace the solutions used in this invention that are obtained from commercial sources. All amounts in the Tables 1-9 below are provided at numerical values to give an optimum result. It is understood that each constituent member is in the range of ±25%, ±10%, preferably ±5%, more preferably ±3%, or even more preferably ±1% in the solution. One skilled in the art can adjust requisite osmolality of the solution for the purposes defined herein.

The following Table 1 shows a fomulation of a stabilization solution for a 1-liter base solution.

**Table 1: Suspend A**

| **Constituents** | **mmoles/L** | **mg/L Req'd** |
|---|---|---|
| Water for injection | | **1L** |
| Sodium chloride | 95.000 | **5551.8** |
| Potassium chloride | 3.0 | **223.6** |
| Calcium chloride | 1.800 | **264.6** |
| Potassium phosphate | 0.350 | **60.9** |
| Magnesium sulfate | 4.000 | **481.6** |
| Sodium bicarbonate | 22.50 | **1890.2** |
| Glucose | 0.220 | **39.6** |
| Lactate, sodium salt, solution | | **1.42 ml/L** |
| Sodium pyruvate | 0.22 | **24.2** |
| L-phenylalanine | .090 | **14.8** |
| L-tryptophan | 0.0225 | **4.6** |
| L-lysine HCl | 0.180 | **39.4** |
| L-threonine | 0.180 | **21.4** |
| L-valine | 0.180 | **21.1** |
| L-Methionine | 0.045 | **6.7** |
| L-isoleucine | 0.180 | **23.6** |
| L-leucine | 0.180 | **23.6** |
| L-proline | 0.045 | **5.2** |
| glycine | 0.045 | **3.4** |
| L-alanine | 0.045 | **4.0** |
| L-tryosine | 0.090 | **16.3** |
| L-histidine HCI | 0.090 | **13.9** |
| L-arginine HCI | 0.270 | **56.9** |
| L-aspartic acid | 0.045 | **6.0** |
| L-serine | 0.045 | **4.7** |
| L-asparagine | 0.270 | **40.5** |
| L-glutamic acid | 0.045 | **8.3** |
| L-cystine | 0.045 | **10.8** |
| Alanyl-glutamine | 0.450 | **97.7** |
| EDTA | 0.009 | **3.4** |
| Phenol Red | 1.5 µg/ml | **1.5** |
| Gentamicin sulfate | 0.01 µg/ml | **0.01** |
| Human Serum Albumin | | **5.04 g/L** |
| Alpha Globulin | | **0.48 g/L** |
| Beta Globulin | | **0.48 g/L** |

The following Table 2 shows a fomulation of a stabilization solution for a 1-liter base solution.

**Table 2: Suspend B**

| | | |
|---|---|---|
| **Constituents** | **mmoles/L** | **mg/L req'd** |
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |

The following Table 3 shows a fomulation of a cryoprotectant solution for a 1-liter base solution.

**Table 3: Suspend C**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Propylene glycol | 1.5M | **114.15 g/L** |

The following Table 4 shows a fomulation of a cryoprotectant solution for a 1-liter base solution.

**Table 4: Suspend D**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 1.5M | **114.15 g/L** |
| Sucrose, Crystal, NF | 0.12M | **42.28 g/L** |

The following Table 5 shows a fomulation of a cryoprotectant solution for a 1-liter base solution.

**Table 5: Suspend E**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 1.5M | **114.15 g/L** |
| Sucrose, Crystal, NF | 0.24M | **84.552 g/L** |

The following Table 6 shows a fomulation of a cryoprotectant solution for a 1-liter base solution.

**Table 6: Renew 1**

| **Constituents** | **mmoles/L** | **mg/L req'd** |
|---|---|---|
| Water for injection | | **1L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 1.0M | **76.10 g/L** |
| Sucrose, Crystal, NF | .29M | **102.16 g/L** |

The following Table 7 shows a fomulation of a cryoprotectant solution for a 1-liter base solution.

**Table 7: Renew 2**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| Polypropylene Glycol, USP | 0.5M | **38.05 g/L** |
| Sucrose, Crystal, NF | .29M | **102.16 g/L** |

The following Table 8 shows a fomulation of a dehydrating solution for a 1-liter base solution.

**Table 8: Renew 3**

| **Constituents** | **mmoles/L** | **mg/L req'd** |
|---|---|---|
| Water for injection | | **1 L** |
| Sodium chloride | 95.000 | **5551.8** |
| Potassium chloride | 4.600 | **342.9** |
| Calcium chloride | 1.700 | **249.9** |
| Potassium phosphate | 0.350 | **60.9** |
| Magnesium sulfate | 0.200 | **24.1** |
| Sodium bicarbonate | 4.000 | **336.0** |
| Glucose | 2.780 | **550.9** |
| Lactate, sodium salt, Solution | 21.400 | **2398.1** |
| Sodium pyruvate | 0.300 | **33.0** |
| Phenol Red | 1.5 µg/ml | **1.5** |
| Gentamicin sulfate | 0.01 µg/ml | **0.01** |
| Human Serum Albumin | | **10.8 g/L** |
| Alpha Globulin | | **0.96 g/L** |
| Beta Globulin | | **0.96 g/L** |
| | | |
| Sucrose, Crystal, NF | .29M | **102.16 g/L** |

The following Table 9 shows a fomulation of a stabilization solution for a 1-liter base solution.

**Table 9: Renew 4**

| **Constituents** | **mmoles/L** | **mg/L req'd** |
|---|---|---|
| Water for injection | | **1 L** |
| Sodium chloride | 95.000 | **5551.8** |
| Potassium chloride | 3.00 | **223.6** |
| Calcium chloride | 1.800 | **264.6** |
| Potassium phosphate | 0.350 | **60.9** |
| Magnesium sulfate | 4.000 | **481.6** |
| Sodium bicarbonate | 22.50 | **1890.2** |
| Glucose | 0.220 | **39.6** |
| Lactate, sodium salt, Solution | | **1.42 ml/L** |
| Sodium pyruvate | 0.220 | **24.2** |
| L-phenylalanine | .090 | **14.8** |
| L-tryptophan | 0.0225 | **4.6** |
| L-lysine HCI | 0.180 | **39.4** |
| L-threonine | 01.80 | **21.4** |
| L-valine | 0.180 | **21.1** |
| L-Methionine | 0.045 | **6.7** |
| L-isoleucine | 0.180 | **23.6** |
| L-leucine | 0.180 | **23.6** |
| L-proline | 0.045 | **5.2** |
| glycine | 0.045 | **3.4** |
| L-alanine | 0.045 | **4.0** |
| L-tyrosine | 0.090 | **16.3** |
| L-histidine HCI | 0.090 | **13.9** |
| L-arginine HCI | 0.270 | **56.9** |
| L-aspartic acid | 0.045 | **6.0** |
| L-serine | 0.045 | **4.7** |
| L-asparagine | 0.270 | **40.5** |
| L-glutamic acid | 0.045 | **8.3** |
| L-cystine | 0.045 | **10.8** |
| Alanyl-glutamine | 0.450 | **97.7** |
| EDTA | 0.009 | **3.4** |
| Phenol Red | 1.5 µg/ml | **1.5** |
| Gentamicin sulfate | 0.01 µg/ml | **0.01** |
| Human Serum Albumin | | **5.04 g/L** |
| Alpha Globulin | | **0.48 g/L** |
| Beta Globulin | | **0.48 g/L** |

It will be appreciated that the invention has been described hereabove with reference to certain examples or preferred embodiments as shown in the drawings. Various additions, deletions, changes and alterations may be made to the above-described embodiments and examples without departing from the intended spirit and scope of this invention.

## Claims

1. A method for reanimating cryopreserved animal oocytes which method comprises:
a) removing one or more containers from cryoprotection which containers comprise frozen oocyte(s) in a cryoprotectant solution;
b) maintaining the withdrawn containers under conditions to melt any cytoplasmic ice in the oocyte and then removing the oocyte(s) from the container;
c) reanimating the oocyte(s) by immersion in successive warm aqueous solutions each containing a lower gradient of cryoprotectant than the prior solution under conditions wherein oocyte(s) is(are) reanimated and lyses of the oocyte due to osmotic shock is inhibited while maintaining each solution at a temperature of from about 28° to 35°C; and
d) stabilizing the reanimated oocytes in a reanimation stabilization solution maintained at a temperature of from about 33° to about 38°C for a period of time sufficient to stabilize the reanimated oocytes for fertilization.

2. The method of Claim 1, wherein maintaining the withdrawn containers under conditions to melt any cytoplasmic ice in the oocyte comprises:
a) exposing the containers to ambient atmospheric conditions (e.g., air environment maintained at room temperature); and
b) immersion of the containers in a warm water bath.

3. The method of Claim 2, wherein the containers are first exposed to ambient atmospheric conditions preferably for a period of less than 5 minutes and more preferably for less than 1 minute and even more preferably for about 15 seconds.

4. The method of Claim 3, wherein the containers are immersed in a warm water bath preferably maintained at a temperature of from about 25° to 35°C.

5. The method of Claim 2, wherein immersion in the warm water bath is for less than 5 minutes.

6. The method of Claim 1, wherein reanimating the oocyte(s) by immersion in successive warm aqueous solutions each containing a lower gradient of cryoprotectant than the prior solution under conditions wherein oocyte(s) is(are) reanimated and lyses of the oocyte(s) due to osmotic shock is inhibited is conducted in solutions maintained at a temperature of from about 29° to 34°C.

7. The method of Claim 1, wherein three successive solutions containing a lower gradient of cryoprotectant are employed.

8. The method of Claim 7, wherein the three successive solutions comprise:
a) a first solution comprising from about 0.8 to about 1.2 M propylene glycol;
b) a second solution comprising from about 0.3 to about 0.7 M propylene glycol; and
c) a third solution comprising less than 0.3 M propylene glycol, preferably less than 0.1 M propylene glycol, and even more preferably no propylene glycol.

9. The method of Claim 8, wherein each of these solutions optionally further comprise one or more components selected from the group consisting of a sugar, m-HTF and SSS.

10. The method of Claim 9, wherein the sugar is sucrose.

11. The method of Claim 9, wherein the sugar concentration is from about 0.20 to 0.35 M.

12. The method of Claim 9, wherein the m-HTF is employed in a range from about 70 to 90 by volume.

13. The method of Claim 9, wherein the SSS is employed at a concentration of from about 10 to 30 by volume.

14. The method of Claim 8, wherein the oocyte(s) are immersed in the first solution at a temperature of from about 30 to 34°C.

15. The method of Claim 8, wherein the immersion time for the oocyte(s) in the first solution is from about 3-7 minutes.

16. The method of Claim 8, wherein the concentration of propylene glycol in the first solution is about 1.0 M and the pH of this solution is preferably maintained at about 7.2 to 7.3.

17. The method of Claim 8, wherein after immersion of the oocyte(s) in the first solution, said oocyte(s) is (are) transferred to a second solution maintained at a temperature of from about 30 to 34°C.

18. The method of Claim 17, wherein the second solution is maintained at a temperature of from about 31 to 33°C.

19. The method of Claim 17, wherein the immersion time of the oocyte(s) in the second solution is from about 3-7 minutes.

20. The method of Claim 17, wherein the concentration of propylene glycol in the second solution is about 0.5 M and the pH of this solution is preferably maintained at about 7.2 to 7.3.

21. The method of Claim 8, wherein after immersion of the oocyte(s) in the second solution, said oocyte(s) is (are) transferred to a third solution maintained at a temperature of from about 30 to 34°C.

22. The method of Claim 21, wherein the third solution is maintained at a temperature of from about 31 to 33°C.

23. The method of Claim 21, wherein the immersion time of the oocyte(s) in the third solution is from about 3-7 minutes.

24. The method of Claim 21, wherein the concentration of propylene glycol in the third solution is less than about 0.3 M and the pH of the third solution is about 7.2 to 7.3.

25. The method of Claim 1, wherein, upon completion of immersion in this successive series of thawing solutions, the oocyte(s) is (are) immersed in a reanimation stabilization solution.

26. A cryoprotectant solution for oocyte thawing, comprising a cryaoprotectant wherein the cryoprotectant solution is maintained at a temperature of from about 29°C to 34°C, and wherein the cryoprotectant solution reanimates an oocyte and inhibits a lyses of the oocyte by an osmotic shock.

27. The cryoprotectant solution of claim 26, wherein the temperature of the cryoprotectant solution is maintained from about 30°C to 34°C.

28. The cryoprotectant solution of claim 26, wherein the temperature of the cryoprotectant solution is maintained from about 31°C to 33°C.

29. The cryoprotectant solution of claim 26, wherein the temperature of the cryoprotectant solution is maintained at 32 ± 0.5°C.

30. The cryoprotectant solution of claim 26, wherein the cryoprotectant is selected from the group consisting of dimethylsulfoxide, ethylene glycol, propylene glycol, glycerol, and combination thereof.

31. The cryoprotectant solution of claim 26, wherein the cryoprotectant is propylene glycol.

32. The cryoprotectant solution of claim 31, wherein a concentration of the propylene glycol is from about 0.8 to about 1.2 M.

33. The cryoprotectant solution of claim 31, wherein a concentration of the propylene glycol is from about 0.3 to about 0.7 M.

34. The cryoprotectant solution of claim 31, wherein a concentration of the propylene glycol is less than about 0.3 M.

35. The cryoprotectant solution of claim 31, wherein a concentration of the propylene glycol is less than about 0.1 M.

36. The cryoprotectant solution of claim 31, wherein the cryoprotectant solution further comprises one or more components selected from the group consisting of a sugar, m-HTF and SSS.

37. The cryoprotectant solution of claim 36, wherein the sugar is sucrose, dextrose, trehalose, lactose, or raffinose.

38. The cryoprotectant solution of claim 37, wherein the sugar is sucrose.

39. The cryoprotectant solution of claim 36, wherein a concentration of the sugar is from about 0.20 to 0.35 M.

40. The cryoprotectant solution of claim 39, wherein a concentration of the sugar is about 0.25 M.

41. The cryoprotectant solution of claim 36, wherein the m-HTF concentration is in a range from about 70 to 90% by volume.

42. The cryoprotectant solution of claim 36, wherein the SSS is at a concentration of from about 10 to 30% by volume.

43. The cryoprotectant solution of claim 26, wherein the cryoprotectant solution is of Table 6 or Table 7.

44. A dehydrating solution for oocyte thawing, comprising a dehydrating agent wherein the dehydrating solution is maintained at a temperature of from about 29°C to 34°C, and wherein the dehydrating solution reanimates an oocyte and inhibits a lyses of the oocyte by an osmotic shock.

45. The dehydrating solution of claim 44, wherein the dehydrating solution is of Table 8.

46. The dehydrating solution of claim 44, wherein the dehydrating agent is sucrose.

47. The dehydrating solution of claim 44, wherein the dehydrating solution is maintained at a temperature of from about 31 °C to 33 °C.

48. The dehydrating solution of claim 44, wherein the dehydrating solution is maintained at a temperature of about 32 ± 0.5°C.
